# EUROPÄISCHE PATENTSCHRIFT

(11) **EP 2 629 643 B1**
(45) Veröffentlichungstag und Bekanntmachung des Hinweises auf die Patenterteilung: **06.12.2017**
(21) Anmeldenummer: 11778508.9
(22) Anmeldetag: 04.10.2011
(51) Int. Cl.: F16B 7/22, F16B 7/10, A47B 49/00

(54) **BESCHLAG FÜR MÖBEL**
FITTING FOR FURNITURE
FERRURE POUR MEUBLE

(30) Priorität: 18.10.2010 DE 202010014344 U
(43) Veröffentlichungstag der Anmeldung: 28.08.2013
(73) Patentinhaber: Kesseböhmer Holding KG, 49152 Bad Essen (DE)
(72) Erfinder: BARO, Dietmar, 49080 Osnabrück (DE); KREYENKAMP, Reiner, 49152 Bad Essen (DE); MARTLING, Frank, 49152 Bad Essen (DE)
(74) Vertreter: Busse & Busse
(86) Internationale Anmeldenummer: PCT/EP2011/004924
(87) Internationale Veröffentlichungsnummer: WO 2012/052113

(56) Entgegenhaltungen:
- EP-A1- 1 098 130
- DE-A1- 4 303 832
- DE-A1-102006 028 249
- DE-U1- 7 617 755
- DE-U1-202005 020 922

## Beschreibung

Die Erfindung bezieht sich auf einen Beschlag für Möbel, mit einer im wesentlichen vertikalen Tragsäule sowie mit einem an der Tragsäule anzuordnenden Verbinder zur Halterung von an der Tragsäule abgestützten Gegenständen wie einem Tablar oder dgl., wobei der Verbinder über einen Höhenversteller an der Tragsäule höhenveränderlich abstützbar ist und wobei der Höhenversteller die vertikale Tragsäule umgreift und einem in eine Lochausnehmung in der vertikalen Tragsäule festlegbaren Aktuator umfasst.

Beschläge für Möbel der vorgenannten Art, insbesondere für Kücheneckschränke mit einem über eine Eckschranktür zugänglichen Innenraum der vorgenannten Art zur Halterung von aus dem Eckschrank herausschwenkbaren Tablaren sind aus der EP 1 949 817 B1 bekannt. Bei diesem Beschlag kann die vertikale Tragsäule auf unterschiedliche Schrankhöhen dergestalt eingestellt werden, indem die Tragsäule zweiteilig und teleskopierbar ausgebildet ist. Von der Tragsäule abzustützende Gegenstände wie Tablare sind jedoch nur an einem Teil der zweiteiligen Tragsäule abzustützen, so dass im oberen Bereich der Tragsäule Tablare nicht anzuordnen sind. Dies steht einer optimalen Ausnutzung eines Schrankinnenraumes eines Möbels entgegen.

Aus der DE 7617755 U1 ist ein Schrankmöbel mit einer Befestigungsvorrichtung für Schwenkböden bekannt. Jeder Schwenkboden ist um die feststehende Säule drehbar angeordnet und stützt sich auf einem die Säule haltenden Lager ab. An der Säule ist ein oberer Schwenkboden an einem ringartigen Lager drehbar abzustützen, wobei das ringartige Lager höhenveränderlich an der Säule festzulegen ist. Die Tragsäule ist jedoch nicht auf unterschiedliche Schrankhöhen einzustellen und mithin nicht teleskopierbar.

Es ist Aufgabe der vorliegenden Erfindung, einen Beschlag für Möbel zu schaffen, mit dem an der Tragsäule abzustützende Gegenstände wie Tablare und dgl. über einen großen Höhenbereich an der Tragsäule abzustützen sind.

Zur Lösung dieser Aufgabe zeichnet sich der Beschlag für Möbel der eingangs genannten Art dadurch aus, dass der Höhenversteller zumindest zweiteilig ausgebildet ist und ein die vertikale Tragsäule zumindest bereichsweise umgebenes Innenteil umfasst, das zumindest bereichsweise von dem Aktuator umgriffen ist.

Damit ist ein Beschlag für Möbel geschaffen, bei dem über einen separat neben dem Verbinder an der Tragsäule vorzusehenden Höhenversteller die höhenveränderliche Abstützung des Verbinders und damit auch des an diesem Verbinder zu halternden Gegenstandes wie Tablare durchgeführt werden kann. Der Höhenversteller sorgt für die einzunehmende Höhenlage des Verbinders, so dass der Verbinder frei von den Erfordernissen an die Höhenverstellung ausgebildet sein kann. Dieser Höhenversteller kann auch in oberen Bereichen der vertikalen Tragsäule an dieser abgestützt werden, so dass dadurch ein Innenraum eines Möbels, beispielsweise auch eines Kücheneckschrankes in optimaler Weise genutzt werden kann. Der Höhenversteller kann ein Bauteil sein, das den Verbinder und damit auch an diesem festzulegende Tragarme z.B. eines Tablars nach unten hin abstützt, so dass der Verbinder die Tragsäule nur umgreifen muss. Der Höhenversteller als solcher kann so gestaltet sein, dass er mit wenigen Handgriffen von der Tragsäule z.B. auch werkzeuglos von der Tragsäule zu entriegeln ist, um eine Höhenverstellung durchzuführen. Befestigungsmittel zwischen Verbinder und Tragsäule brauchen für eine Höhenverstellung nicht gelöst werden. Vielmehr können auf solche Befestigungsmittel in aller Regel verzichtet werden. Der Höhenversteller selbst kann an die speziellen konstruktiven Anforderungen an der Abstützung und der Höhenverstellung optimiert angepasst sein, so dass mit nur geringem baulichen Aufwand ein optimaler Beschlag mit an der Höhenverstellungsmöglichkeit auch von Tablaren geschaffen ist.

Weitere vorteilhafte Ausgestaltungen ergeben sich aus den Unteransprüchen, der nachfolgenden Beschreibung und der Zeichnung. In der Zeichnung zeigen:
- Fig. 1: ein Ausführungsbeispiel eines Beschlages im Einbauzustand am Beispiel eines teilweise aufgebrochen dargestellten, perspektivisch gezeichneten Kücheneckschrankes;
- Fig. 2: vergrößert die Ansicht "A" in Fig. 1;
- Fig. 3: ein Ausführungsbeispiel eines Höhenverstellers an einer vertikalen Tragsäule in einer perspektivischen Darstellung;
- Fig. 4: eine Querschnittsdarstellung des Ausführungsbeispiels nach Fig. 3,
- Fig. 5: eine zu Fig. 3 analoge Darstellung des Höhenverstellers in einer Entriegelungsstellung, in der eine Höhenverstellung erfolgen kann;
- Fig. 6: eine Querschnittsdarstellung des Ausführungsbeispiels nach Fig. 5;
- Fig. 7: eine Darstellung der Tragsäule mit Verbinder, der sich an dem Höhenversteller abstützt im fertig montierten Zustand, und
- Fig. 8 u. 9: das Ausführungsbeispiel nach Fig. 7 während der Montage des Verbinders zur Abstützung an dem Höhenversteller.

In der Zeichnung sind grundsätzlich gleiche Teile mit übereinstimmenden Bezugsziffern versehen. Allgemein mit 1 ist in der Zeichnung ein Möbel, nämlich ein Kücheneckschrank mit einem Innenraum 2 dargestellt, der über eine Tür 3 zugänglich ist. In dem Innenraum 2 ist der allgemein mit 4 bezifferte Beschlag vorgesehen, der eine vertikal ausgerichtete Tragsäule 5 umfasst, die über im einzelnen nicht näher ersichtliche Schraubverbindungen an einer Seitenwandung des Kücheneckschrankes 1 angebracht ist.

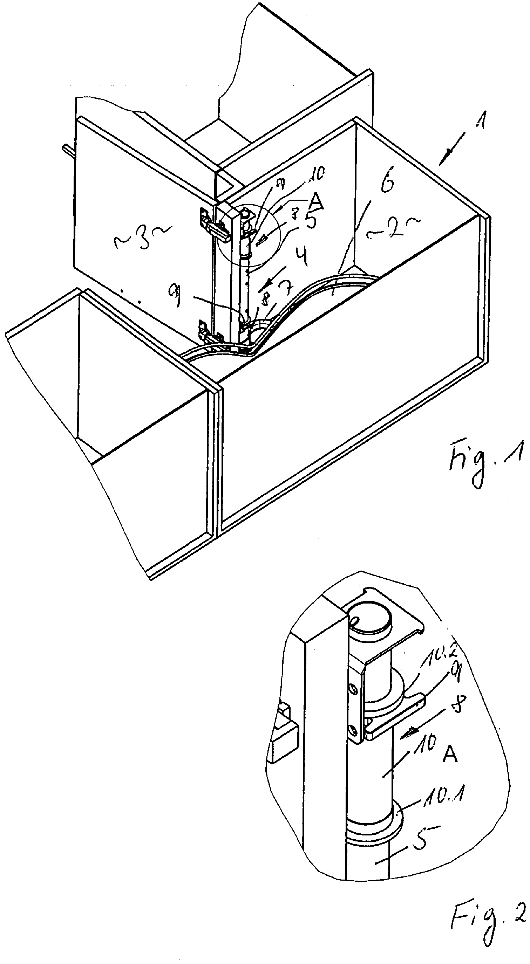

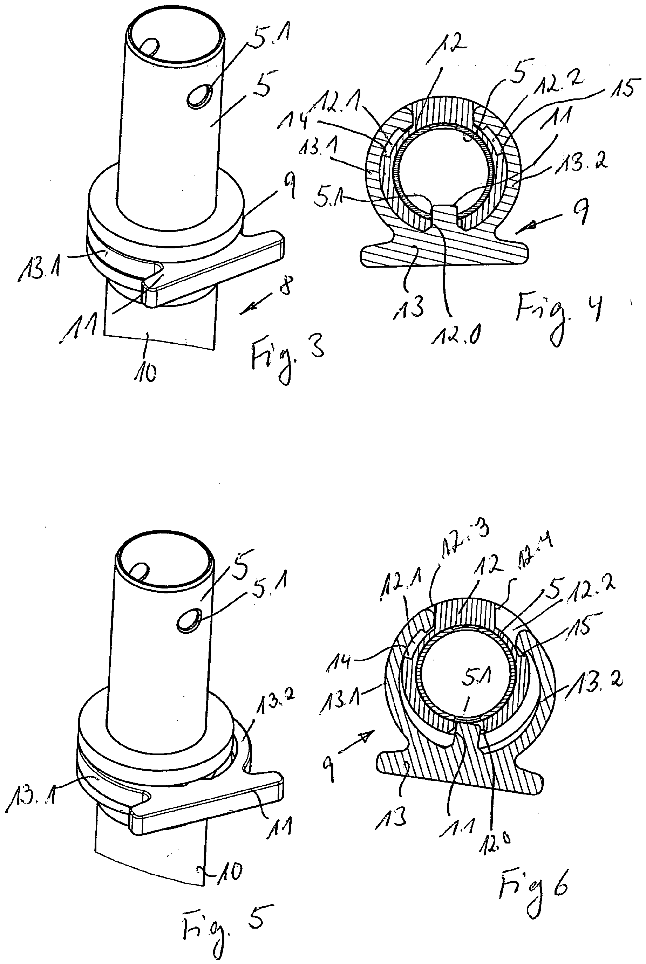

An der Tragsäule ist ein Tablar 6 über einen Tragarm 7 und einen Verbinder 8 abzustützen. Dem Verbinder 8 ist ein Höhenversteller 9 zugeordnet, der Teil eines Befestigungselementes 10 ist, das die vertikale Tragsäule umgreift (Siehe auch Fig. 2). An dem Befestigungselement 10 sind in dem gezeigten Ausführungsbeispiel ein unterer Kragen 10.1 und ein oberer Kragen 10.2 ausgebildet, der in dem gezeigten Ausführungsbeispiel Teil des Höhenverstellers 9 ist. In den Fig. 3 bis 6 ist das Ausführungsbeispiel des Höhenverstellers näher gezeigt. Der Höhenversteller 9 ist mit einem Rastansatz 11 versehen und in entsprechenden Lochausnehmungen 5.1 mit einzubringen. Der Höhenversteller 9 besteht in dem gezeigten Ausführungsbeispiel aus zwei Teilen, nämlich einem die vertikale Tragsäule 5 umgreifenden Innenteil 12 und einem Aktuator 13. Der Aktuator umgreift das Innenteil 12 bereichsweise, wozu das Innenteil 12 seinerseits eine Lochausnehmung 12.1 hat, die im montierten Zustand des Höhenverstellers (Fig. 3 und Fig. 4) genauso wie die Lochausnehmung 5.1 der vertikalen Tragsäule von dem Rastansatz 11 durchgriffen ist, so dass der Höhenversteller an der vertikalen Tragsäule zu halten ist und darüber den Verbinder abstützen kann. Ist ein Befestigungselement 10 vorgesehen, kann sich auch der Höhenversteller 9 oberhalb des Verbinders 8 erstrecken, da über den Höhenversteller 9 und die Rastanformung 11 das Befestigungselement 10 gehalten ist und über den unteren Kragen 10.1 (Fig. 2) den Verbinder 8 und mithin auch den Tragarm 7 und das Tablar 6 abstützen kann.

Das Innenteil 12 ist mit einer (linken) Führungsbahn 12.1 und einer (rechten) Führungsbahn 12.2 ausgerüstet, in denen jeweils ein Schenkel 13.1 bzw. 13.2 geführt ist. Die Führungsbahnen 12.1 und 12.2 haben jeweils eine Führungsbahnlänge bis zu einem in den Fig. 4 und 6 unteren Endanschlägen 14 und 15 und oberer Endanschlägen 12.3 und 12.4, die auf eine Entriegelung und eine Verriegelung des Höhenverstellers 9 an der vertikalen Tragsäule 5 entsprechend ausgerichtet sind.

In Fig. 4 ist die Stellung gezeigt, in der die Schenkel 13.1 und 13.2 ihre Endmontagestellung eingenommen haben und am oberen Ende der Führungsbahn gelegen sind. Der Rastansatz 11 ist in den Lochausnehmungen 12.1 und 5.1 gelegen, so dass der Höhenversteller mit der vertikalen Tragsäule 5 verrastet ist.

In Fig. 6 ist über den Handgriff des Aktuators der rechte Schenkel 13.2 bis an den unteren Anschlag 15 bewegt, wobei die Führungsbahnlänge der Führungsbahn 12.2 so auf die Entriegelungsbewegung bzw. den Entriegelungsweg abgestimmt ist, dass der Rastansatz 11 aus der Lochausnehmung 5.1 der vertikalen Tragsäule 5 herausbewegt ist. Während der Bewegung des Schenkels 13.2 in der Führungsbahn 12.2 stützt sich der andere Schenkel 12.1 am oberen Endanschlag 12.3 ab, wodurch der Rastansatz 11 sicher aus der Lochausnehmung 5.1 herausgebracht werden kann.

Alternativ ist es möglich, den Aktuator insgesamt zu ziehen, so dass beide Schenkel 13.1 und 13.2 an die Endanschläge 14, 15 gelangen. Dadurch kann auch die Entkopplung vorgenommen werden. Der Höhenversteller 9 ist dann von der vertikalen Tragsäule 5 entkoppelt, so dass eine Höhenverstellung durchgeführt werden kann. Wird der in Fig. 6 linke Schenkel 13.1 auch noch in der Führungsbahn 12.1 zum Anschlag 14 hin bewegt, ist der Aktuator 13 von dem Innenteil 12 zu entkoppeln. Fig. 5 zeigt den in Fig. 6 gezeigten geschnittenen Zustand in perspektivischer Darstellung.

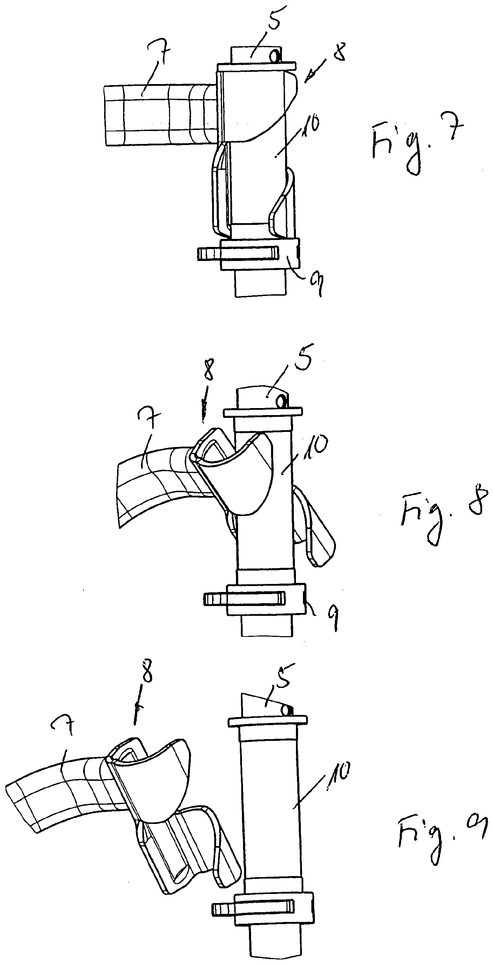

In den Fig. 7 bis 9 ist ein Ausführungsbeispiel eines Verbinders 8 gezeigt, der völlig werkzeuglos an dem Befestiger 10 der vertikalen Tragsäule 5 mit dem Höhenversteller 9 zu befestigen ist.

Fig. 9 zeigt eine Ausgangsposition, bei der der Befestiger 8 mit seinen gegensinnig ausgerichteten Armen und dazwischen gelegenen Spalt montiert werden soll. In Fig. 8 ist der Befestiger 10 mit der Tragsäule 5 in den Spalt zwischen den gegensinnig ausgerichteten Armen des Verbinders 8 eingefädelt. Ist dieser Zustand erreicht, braucht der Verbinder 8 nur zurückgeschwenkt zu werden in die in Fig. 7 dargestellte Position, wo er sich auf den Höhenversteller 8 abstützt und mithin sicher an der Tragsäule 5 höhenverstellbar festzulegen ist.

## Patentansprüche

1. Beschlag für Möbel mit einer im wesentlichen vertikalen Tragsäule (5) sowie mit einem an der Tragsäule (5) anzuordnenden Verbinder (8) zur Halterung von an der Tragsäule (5) abgestützten Gegenständen wie einem Tablar (6) oder dgl., wobei der Verbinder über einen Höhenversteller (9) an der Tragsäule höhenveränderlich abstützbar ist und wobei der Höhenversteller (9) die vertikale Tragsäule (5) umgreift und einen in eine Lochausnehmung (5.1) in der vertikalen Tragsäule festlegbaren Aktuator (13) umfasst, **dadurch gekennzeichnet, dass** der Höhenversteller (9) zumindest zweiteilig ausgebildet ist und ein die vertikale Tragsäule (5) zumindest bereichsweise umgebenes Innenteil (12) umfasst, das zumindest bereichsweise von dem Aktuator (13) umgriffen ist.

2. Beschlag nach einem der Anspruch 1, **dadurch gekennzeichnet, dass** das Innenteil (12) eine mit einem Loch (5) in der vertikalen Tragsäule (5) kongruierende Lochausnehmung (12.1) hat, die von einem an dem Aktuator (13 a) ausgebildeten Rastansatz (11) durchgreifbar ist.

3. Beschlag nach Anspruche 1 oder 2, **dadurch gekennzeichnet, dass** der Aktuator (13) das Innenteil (12) bereichsweise umgreifende Schenkel (13.1, 13.2) hat mit Führungsenden, die jeweils in einer Führungsbahn (12.1, 12.2) mit Endanschlägen (14, 15) und (12.3, 12.4) am Innenteil (12) geführt sind.

4. Beschlag nach Anspruch 3, **dadurch gekennzeichnet, dass** eine Führungsbahn (12.1, 12.2) eine Führungsbahnlänge derart hat, dass durch eine Bewegung eines Schenkels (13.2) in der Führungsbahn (12.2) aus einer Endmontagestellung, in der der Rastansatz des Aktuators (13) die Lochausnehmung (5.1) der vertikalen Tragsäule (5) und die Lochausnehmung (12.a) des Innenteils (12) durchgreift bis an den Endanschlag (15) der Führungsbahn (12) des Rastansatzes (11) aus der Lochausnehmung (5.1) der vertikalen Tragsäule (5) herausbewegt wird und danach der Höhenversteller (9) mit seinem Innenteil (12) und seinem Aktuator (13) an der vertikalen Tragsäule (5) höhenverstellbar ist.

5. Beschlag nach Anspruch 4, **dadurch gekennzeichnet, dass** sich während der Bewegung des Schenkels (13.2) in der Führungsbahn (12.2) der andere Schenkel (13.1) an dem oberen Endanschlag (12.3) abstützt.

6. Beschlag nach Anspruch 5, **dadurch gekennzeichnet, dass** der Rastansatz (11) des Aktuators (13) sowohl durch eine Bewegung des einen Schenkels (13.2) in seiner Führungsbahn (12.2) als auch durch die Bewegung des anderen Schenkels (13.1) in dessen Führungssbahn (12.1) aus einer Lochausnehmung (5.1) in der vertikalen Tragsäule (5) herausbewegbar ist.

7. Beschlag nach Anspruch 5 oder 6, **dadurch gekennzeichnet, dass** der Rastansatz(11) des Aktuators (13) durch eine Bewegung der beiden Schenkel (13.1, 13.2) des Aktuators (13) in der jeweiligen Führungsbahn (12.1, 12.2) im Innenteil (12) aus der Endmontagestellung bis zu dem jeweiligen Endanschlag (14,15) sowohl aus der Lochausnehmung (5.1) der vertikalen Tragsäule (5) als auch aus der Lochausnehmung (12.0) des Innenteils (12) des Höhenverstellers (9) herausbewegbar ist.

8. Beschlag nach einem der Ansprüche 1 bis 7, **dadurch gekennzeichnet, dass** die vertikale Tragsäule (5) mehrere übereinander mit Abstand übereinander angeordnete Lochausnehmungen (5.1) für einen Rastansatz (11) des Aktuators (13) des Höhenverstellers (9) aufweist.

9. Beschlag nach einem der Ansprüche 1 bis 8, **dadurch gekennzeichnet, dass** der Höhenversteller (9) einen Kragen (10.1, 10.2) aufweist, an dem ein die Tragsäule (5) zumindest bereichsweise umgreifender Verbinder (8) lösbar abstützbar ist.

## Claims

1. Fitting for furniture, comprising a substantially vertical supporting column (5) and a connector (8) to be arranged on the supporting column (5), for mounting objects, such as a shelf (6) or the like, that are supported on the supporting column (5), the connector being able to be supported on the supporting column so as to be adjustable in height by means of a height adjuster (9), and the height adjuster (9) encompassing the vertical supporting column (5) and comprising an actuator (13) that can be fixed into a hole (5.1) in the vertical supporting column, **characterised in that** the height adjuster (9) is formed in at least two parts and comprises an inner part (12) that surrounds the vertical supporting column (5) at least in regions and is encompassed by the actuator (13) at least in regions.

2. Fitting according to claim 1, **characterised in that** the inner part (12) has a hole (12.1) that is congruent with an opening (5) in the vertical supporting column (5) and can be penetrated by a locking shoulder (11) that is formed on the actuator (13a).

3. Fitting according to either claim 1 or claim 2, **characterised in that** the actuator (13) comprises legs (13.1, 13.2) that encompass the inner part (12) in regions and have guide ends, which are each guided in a guide path (12.1, 12.2) having end stops (14, 15) and (12.3, 12.4) on the inner part (12).

4. Fitting according to claim 3, **characterised in that** a guide path (12.1, 12.2) has a guide path length such that the locking shoulder (11) is moved out of the hole (5.1) in the vertical supporting column (5) by a leg (13.2) being moved in the guide path (12.2) from a final assembly position in which the locking shoulder of the actuator (13) penetrates the hole (5.1) in the vertical supporting column (5) and the hole (12.a) in the inner part (12), as far as the end stop (15) of the guide path (12), and thereafter the height adjuster (9) together with the inner part (12) and the actuator (13) thereof is adjustable in height on the vertical supporting column (5).

5. Fitting according to claim 4, **characterised in that**, during the movement of the leg (13.2) in the guide path (12.2), the other leg (13.1) is supported on the upper end stop (12.3).

6. Fitting according to claim 5, **characterised in that** the locking shoulder (11) of the actuator (13) can be moved out of a hole (5.1) in the vertical supporting column (5) both by one leg (13.2) being moved in the guide path (12.2) thereof and by the other leg (13.1) being moved in the guide path (12.1) thereof.

7. Fitting according to either claim 5 or claim 6, **characterised in that** the locking shoulder (11) of the actuator (13) can be moved both out of the hole (5.1) in the vertical supporting column (5) and out of the hole (12.0) in the inner part (12) of the height adjuster (9) both legs (13.1, 13.2) of the actuator (13) being moved in the relevant guide path (12.1, 12.2) in the inner part (12) out of the final assembly position as far as the relevant end stop (14, 15).

8. Fitting according to any of claims 1 to 7, **characterised in that** the vertical supporting column (5) comprises a plurality of holes (5.1), which are arranged above one another at a distance from one another, for a locking shoulder (11) of the actuator (13) of the height adjuster (9).

9. Fitting according to any of claims 1 to 8, **characterised in that** the height adjuster (9) comprises a collar (10.1, 10.2) on which a connector (8) that encompasses the supporting column (5) at least in regions can be detachably supported.

## Revendications

1. Ferrure destinée à des meubles, laquelle ferrure comprend une colonne de support (5) sensiblement verticale et un connecteur (8), destiné à être disposé au niveau de la colonne de support (5) et à maintenir des objets supportés par la colonne de support (5), tels qu'un plateau (6) ou analogue, le connecteur pouvant être supporté de façon réglable en hauteur par un moyen de réglage en hauteur (9) au niveau de la colonne de support et le moyen de réglage en hauteur (9) enserrant la colonne de support verticale (5) et comportant un actionneur (13) qui peut être fixé dans un évidement (5.1) ménagé dans la colonne de support verticale, **caractérisée en ce que** le moyen de réglage en hauteur (9) est formé d'au moins deux parties et comporte un élément intérieur (12) entourant au moins partiellement la colonne de support verticale (5) et étant enserré au moins partiellement par l'actionneur (13).

2. Ferrure selon la revendication 1, **caractérisée en ce que** l'élément intérieur (12) comporte un évidement (12.1) qui coïncide avec un trou (5) ménagé dans la colonne de support verticale (5) et qui peut être traversé par une saillie d'encliquetage (11) formée au niveau de l'actionneur (13a).

3. Ferrure selon la revendication 1 ou 2, **caractérisée en ce que** l'actionneur (13) comporte des branches (13.1, 13.2) qui enserrent partiellement l'élément intérieur (12) et comportent des extrémités de guidage qui sont chacune guidées au niveau de l'élément intérieur (12) dans une piste de guidage (12.1, 12.2) munie de butées d'extrémité (14, 15) et (12.3, 12.4).

4. Ferrure selon la revendication 3, **caractérisée en ce qu'**une piste de guidage (12.1, 12.2) a une longueur telle que la saillie d'encliquetage (11) est sortie de l'évidement (5.1) de la colonne de support verticale (5) par un déplacement d'une branche (13.2) dans la piste de guidage (12.2) d'une position de montage finale, dans laquelle la saillie d'encliquetage de l'actionneur (13) s'engage à travers l'évidement (5.1) de la colonne de support verticale (5) et l'évidement (12.a) de l'élément intérieur (12), jusqu'à la butée d'extrémité (15) de la piste de guidage (12) puis le moyen de réglage en hauteur (9) peut être réglé en hauteur avec son élément intérieur (12) et son actionneur (13) au niveau de la colonne de support verticale (5).

5. Ferrure selon la revendication 4, **caractérisée en ce que** l'autre branche (13.1) est supporté par la butée d'extrémité supérieure (12.3) pendant le déplacement de la branche (13.2) dans la piste de guidage (12.2).

6. Ferrure selon la revendication 5, **caractérisée en ce que** la saillie d'encliquetage (11) de l'actionneur (13) peut être sortie d'un évidement (5.1) ménagé dans la colonne de support verticale (5) à la fois par un déplacement de l'une des branches (13.2) dans sa piste de guidage (12.2) et par le déplacement de l'autre branche (13.1) dans sa piste de guidage (12.1).

7. Ferrure selon la revendication 5 ou 6, **caractérisée en ce que** la saillie d'encliquetage (11) de l'actionneur (13) peut être sortie aussi bien de l'évidement (5.1) de la colonne de support verticale (5) que de l'évidement (12,0) de l'élément intérieur du moyen de réglage en hauteur par un déplacement des deux branches (13.1, 13.2) de l'actionneur (13) dans la piste de guidage respective (12.1, 12.2) de l'élément intérieure (12) de la position de montage d'extrémité jusqu'à la butée d'extrémité respective (14, 15).

8. Ferrure selon l'une des revendications 1 à 7, **caractérisée en ce que** la colonne verticale de support (5) comporte une pluralité d'évidements (5.1) disposés à distance les uns au-dessus des autres et destinés à une saillie d'encliquetage (11) de l'actionneur (13) du moyen de réglage vertical (9).

9. Ferrure selon la revendication 1 à 8, **caractérisée en ce que** le moyen de réglage en hauteur (9) comporte un rebord (10.1, 10.2) sur lequel un connecteur, enserrant au moins partiellement la colonne de support (5), peut être supporté de manière amovible.
